# EUROPEAN PATENT SPECIFICATION

(11) **EP 2 281 452 B1**
(45) Date of publication and mention of the grant of the patent: **02.10.2013**
(21) Application number: 09425323.4
(22) Date of filing: 07.08.2009
(51) Int. Cl.: A01K 63/04

(54) **Filtering unit for an aquarium vessel including at least one removable filter cartridge**
Filtereinheit für einen Aquariumbehälter, die mindestens eine herausnehmbare Filterpatrone enthält
Unité de filtration pour réservoir d'aquarium incluant au moins une cartouche filtrante amovible

(43) Date of publication of application: 09.02.2011
(73) Proprietor: Askoll Holding S.r.l., 36031 Povolaro di Dueville (Vicenza) (IT)
(72) Inventor: Marioni, Elio, 36031 Dueville (Vicenza) (IT)
(74) Representative: Botti, Mario

(56) References cited:
- EP-A1- 1 013 167
- EP-A1- 2 025 224
- WO-A1-2006/034275
- DE-U1- 9 214 698

## Description

### Field of application

The present invention relates, in its more general aspect, to a filtering unit for aquariums.

The invention is usefully applied as a filtering unit for domestic aquariums. More particularly it is especially suitable for use as an external filtering unit.

### Prior art

As is known to persons skilled in the art, the proper management of an aquarium requires in general constant recirculation and filtering of the water which houses the fish species raised therein.

To ensure that this requirement is met, special filtering units are used, inside whereof forced circulation of water takes place via a filtering path comprising one or more stations. These filtering units take in water from the aquarium tank and return it there, purified, at the end of said filtering path.

The various stations that make up the filtering path can be assigned to perform filtering actions of different types. More particularly the following are generally distinguished: at least one station for mechanical filtering, intended to intercept the coarser impurities present in the flow of liquid; at least one station for chemical filtering, containing adsorbent material (generally active carbon) assigned to eliminate substances harmful to the health of the organisms housed in the tank; finally at least one station for biological filtering, which houses a culture of nitrifying bacteria used for decomposition of the nitrogenous compounds.

The stations for mechanical filtering and for chemical filtering require periodical operations of maintenance by an operative in order to maintain their efficiency unchanged In fact the elements intended for periodical operations of maintenance by an operative in order to maintain their efficiency unchanged. In fact the elements intended for mechanical filtering have to be cleaned regularly to avoid obstructions caused by the accumulation of impurities, while the filtering carbon in time loses its efficacy and therefore has to be replaced.

To allow easy maintenance of said filtering stations they are often contained inside extractable cartridges which are coupled vertically on the main body of the filtering unit.

The international patent application WO 2006/034275, for example, discloses an external filtering unit for aquarium tank comprising a removable cartridge for mechanical filtering. Other filtering units featuring removable cartridges are disclosed, for instance, by documents EP 2 025 224 and DE 92 14 698 U.

Although substantially meeting requirements, the filtering units offered to date on the market have a series of disadvantages, generally linked to the presence of the removable filtering cartridges.

One disadvantage reported is due for example to the overflowing of the liquid present inside the main body of the filtering unit when, at the end of a routine maintenance operation, the operative reintroduces the filtering cartridge in its housing.

Other disadvantages relate to the correct positioning of the filtering cartridge during its reinsertion, the need to prime the circulation pump after said reinsertion and the limited extension of the path of fluid inside the cartridge used for chemical filtering.

The technical problem at the basis of the present invention is, therefore, that of devising a filtering unit able to facilitate and speed up the operations of extraction and reinsertion of the filtering cartridges, limiting as far as possible the inconvenience for the operative and the time of inactivity of the device during the operations of routine maintenance.

### Summary of the invention

The abovementioned technical problem is solved by a filtering unit for aquariums according to claim 1.

By extracting therefore the first filtering cartridge, the level of' liquid inside of the well lowers. Thanks to this removal of fluid, at the end of the maintenance operation, by repositioning the cartridge in the well the increase in level caused is no longer such as to lead to an overflow of the liquid outside of the container. Consequently the operations of maintenance on the filtering unit are appreciably facilitated.

In addition to the first filtering cartridge described above the filtering unit may comprise a second filtering cartridge, again vertically extractable, which defines an internal volume with inlet and outlet mouths. Said second cartridge may also comprise a lower beaker portion to achieve the purpose mentioned above.

The presence of two filtering cartridges allows the first filtering cartridge to be assigned to mechanical filtering of the liquid flow and the second filtering cartridge to chemical filtering of the same. It is noted however that said filtering actions can also be integrated in a single cartridge. Alternatively only one cartridge may be present, assigned to perform the action of mechanical, chemical or biological filtering.

The first filtering cartridge, or in any case the cartridge assigned to perform mechanical filtering, comprises a lateral filtering surface permeable to the liquid flow circulating in the filtering unit. More particularly this lateral filtering surface can advantageously be a pleated cylindrical surface. Above it, and at the lower end of the cartridge, the lower beaker portion which is not assigned to filtering is associated.

According to the invention, this has the advantage of easy manufacture of the lower beaker portion, not assigned to perform filtering, allowing at the same time a higher filtering surface of the cartridge to be maintained.

The lower beaker portion can easily be coupled on the filtering surface by means of a snap coupling performed by cogged fins which lock on a ring peripheral to the filtering surface, or by means of other suitable locking systems.

The second filtering cartridge, or in any case the cartridge assigned to perform chemical filtering, may comprise similarly a permeable portion, composed for example of' a cylinder with lateral slotted walls, covered below by a beaker portion not assigned to perform filtering and therefore impermeable.

Moreover the internal volume of the cartridge may be traversed by a longitudinal separator with passage aperture in proximity of a lower base of the cartridge, and the inlet and outlet mouths may open, at a position higher than that of the passage aperture of the longitudinal separator, on lateral surfaces of the cartridge separated one from the other by this separator.

Such an internal configuration of the cartridge assigned to perform chemical filtering has the advantage of defining a U-shaped path of the liquid flow, which will thus traverse the entire longitudinal extension of the cartridge itself and the adsorbent material which may be contained therein.

The second filtering cartridge can be housed in the well wherein the first filtering cartridge is also placed. In this case a configuration which advantageously allows univocal definition of the filtering path of the liquid flow provides for division of the well into a first compartment, inside whereof the liquid flow is released from the first filtering cartridge and onto which the inlet mouth of the second filtering cartridge faces, and a second compartment, onto which the outlet mouth of the second filtering cartridge and the outflow aperture of the well face.

More particularly it is especially advantageous to manufacture said first and said second cartridge in a cylindrical form. In this case the well may have two respective cylindrical housings communicating one with the other to house the respective cartridges, The first compartment and the second compartment of the well may be appropriately divided by seven radials extending from an internal wall of the cylindrical housing which contains the second cartridge to an external wall of the same second cartridge.

The lower edge of the outflow aperture of the well is conveniently placed at such a position as to make the operations of reintroduction of the cartridges inside the same well even easier. This position defines in fact the level of liquid which remains inside the well when the action of the pumping means is interrupted. This level will be further lowered by removal of the volume of liquid contained in the lower impermeable portion of the first or of the second cartridge in the case of extraction of the latter. The position of the lower edge will therefore be calculated in such a way that the level remaining after extraction of the first or of the second cartridge is such as not to cause the overflow of the liquid outside of the container of the filtering unit due to the repositioning of the cartridge extracted.

The filtering cartridges can advantageously be associated with an upper cover of the container by means of' a bayonet coupling. This coupling system provided on the upper part of the cartridge considerably eases the operations of repositioning of the same. In fact it is not necessary to collimate the end of the cartridge opposite that manoeuvred by coupling means arranged on the base of the container of the filtering unit, as occurs in other filters according to the prior art

More particularly, the bayonet coupling of the first filtering cartridge may be structured in such a way that, with the cartridge coupled, the inlet mouth is in communication with the upstream portion of the filtering path,

The pumping means of the filtering unit can advantageously comprise a self-priming pump which allows the device to be restarted easily should the filtering path not be full of liquid, for example following a maintenance operation.

This volumetric pump may be advantageously placed inside the first filtering cartridge, for example in an upper portion thereof, in proximity of its inlet mouth.

In this case, the cartridge may comprise above a pushbutton for actuation of the volumetric pump, which can be actuated from outside the container in that it is positioned on the top of the cartridge which remains exposed outside the same container during the normal functioning of the filtering unit.

The pumping means may also advantageously comprise a centrifugal pump arranged along the downstream portion of the filtering path.

The filtering unit may also advantageously comprise means for the biological filtering of the liquid flow moved along the filtering path. For example one or more superimposed baskets may be present, intended to contain material for the biological filtering, traversed vertically by the downstream portion of filtering path in relation to the first filtering cartridge.

It should be noted that the filtering unit according to the present invention is particularly suitable for an external use in relation to the aquarium tank wherewith it is associated.

Further features and advantages of the filtering unit according to the invention shall be made clearer by the description, given herein below, of a specific embodiment given by way of a non-limiting example with reference to the accompanying drawings.

### Brief description of the drawings

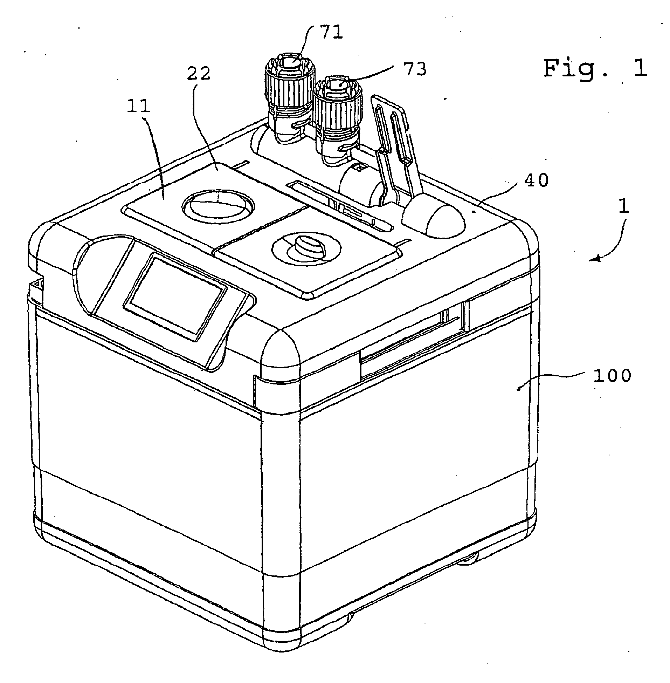

Figure 1 shows a perspective view of a filtering unit according to the present invention in one of its operative configurations;

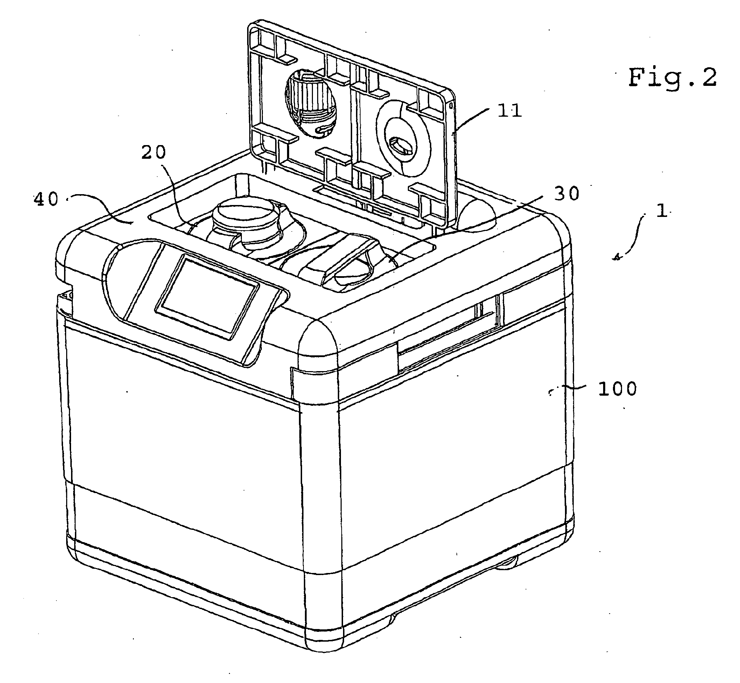

Figure 2 shows a perspective view of the filtering unit of Figure 1 in one of its maintenance configurations;

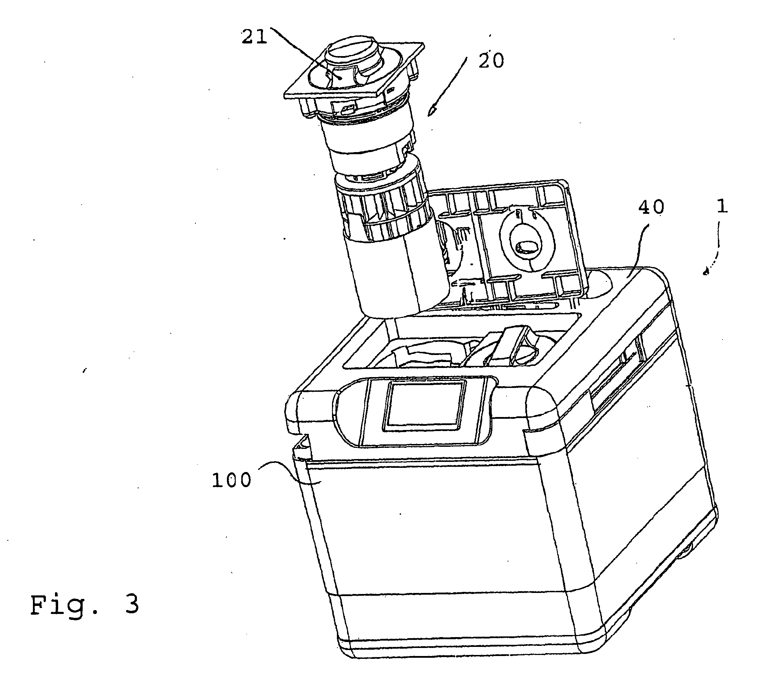

Figure 3 shows a perspective view of the filtering unit of Figure 1 in one of its maintenance configurations, a first filtering cartridge being extracted from the unit;

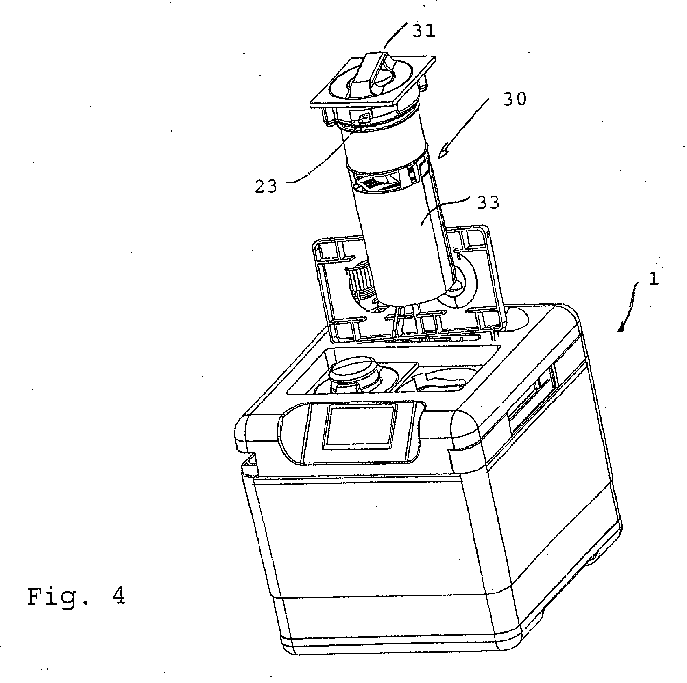

Figure 4 shows a perspective view of the filtering unit of Figure 1 in one of its maintenance configurations, a second filtering cartridge being extracted from the unit;

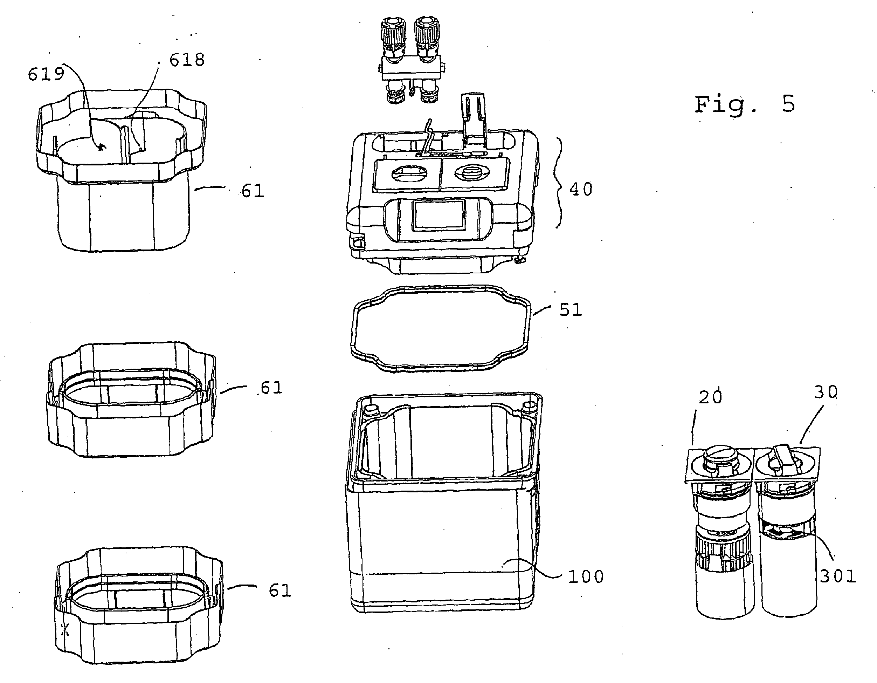

Figure 5 shows a view with blown-up parts of the filtering unit of Figure 1;

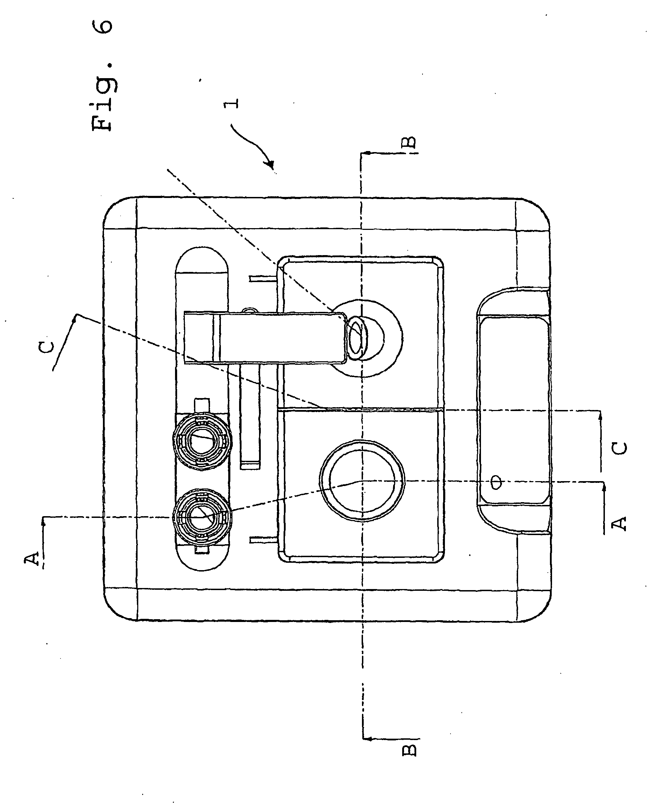

Figure 6 shows a view from above of the filtering unit of Figure 1;

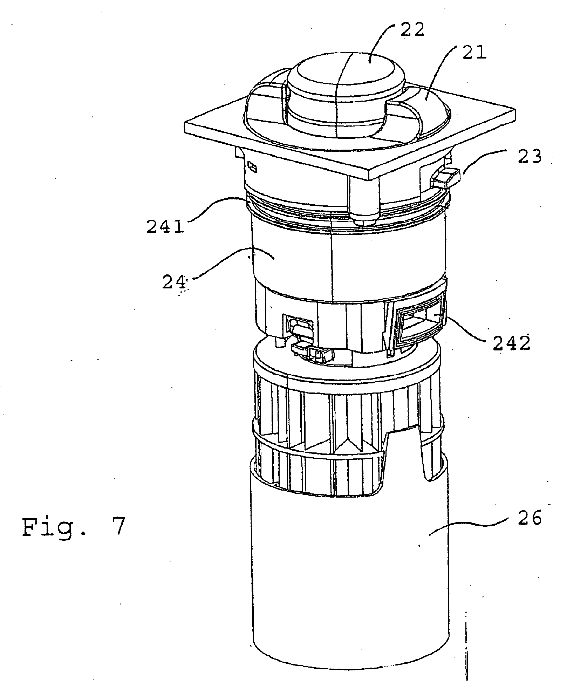

Figure 7 shows a perspective view of a first cartridge of the filtering unit of Figure 1;

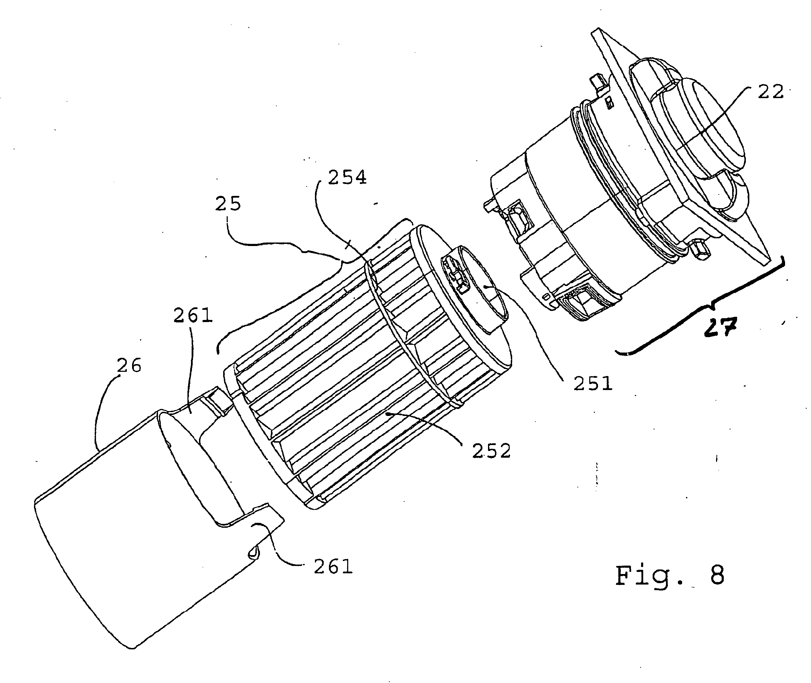

Figure 8 shows a view with blown-up parts of the first cartridge of Figure 7;

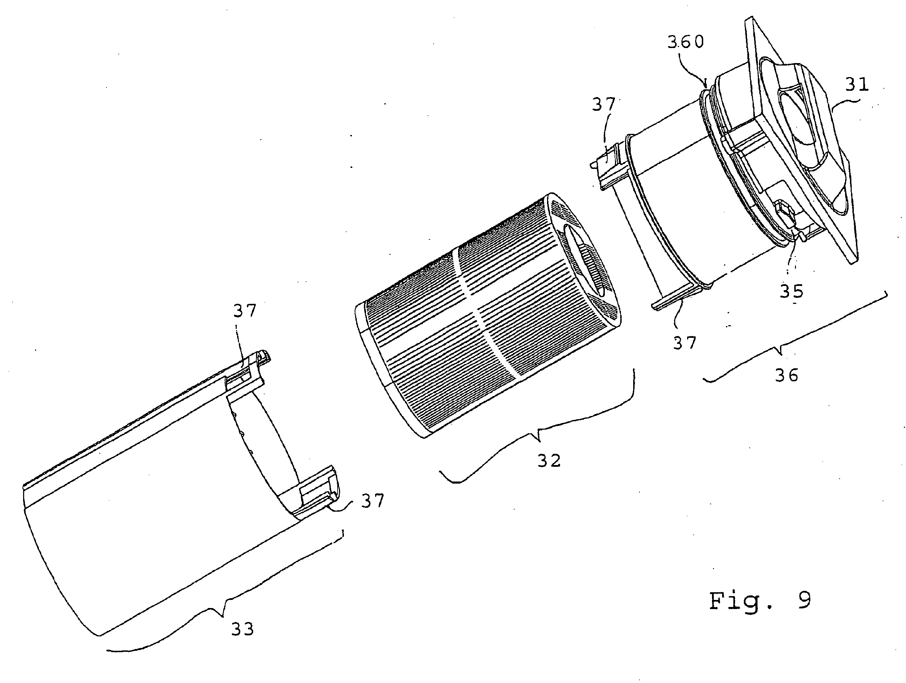

Figure 9 shows a view with blown-up parts of a second cartridge of the filtering unit of Figure 1;

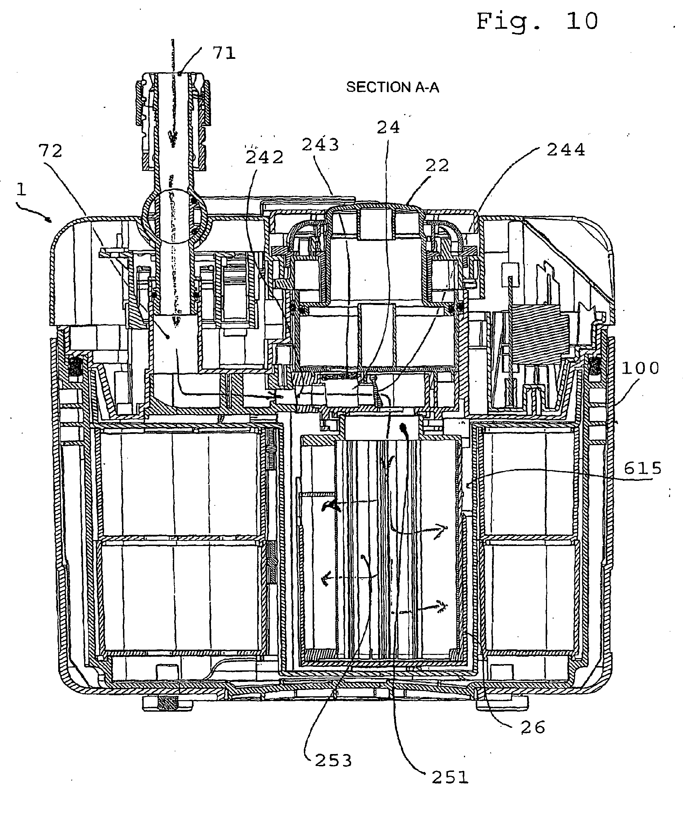

Figure 10 shows a view sectioned along a first plane A-A of the filtering unit of Figure 6;

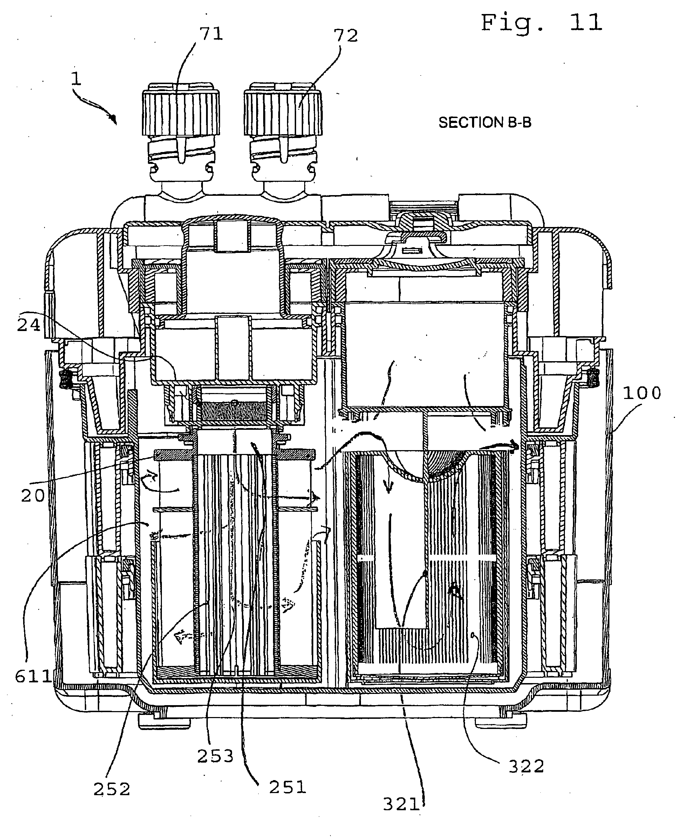

Figure 11 shows a view sectioned along a second plane B-B of the filtering unit of Figure 6;

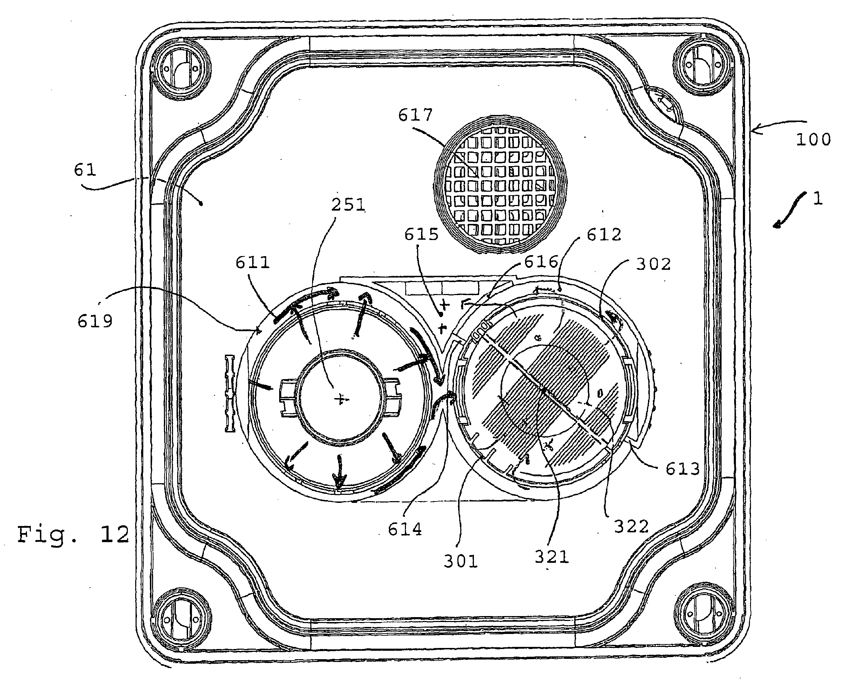

Figure 12 shows a view from above of the filtering unit of Figure 1, an upper cover of said filtering unit having been removed for greater clarity;

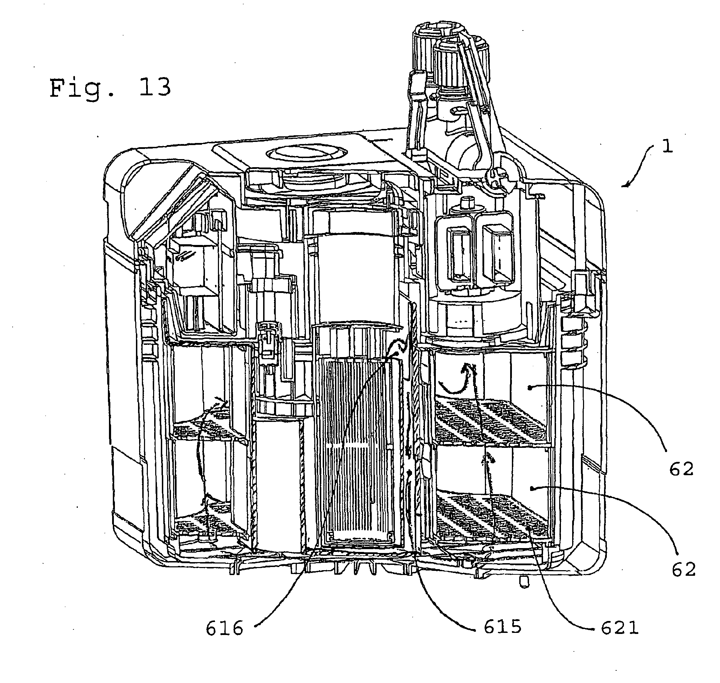

Figure 13 shows a perspective view sectioned along a vertical plane of the filtering unit of Figure 1;

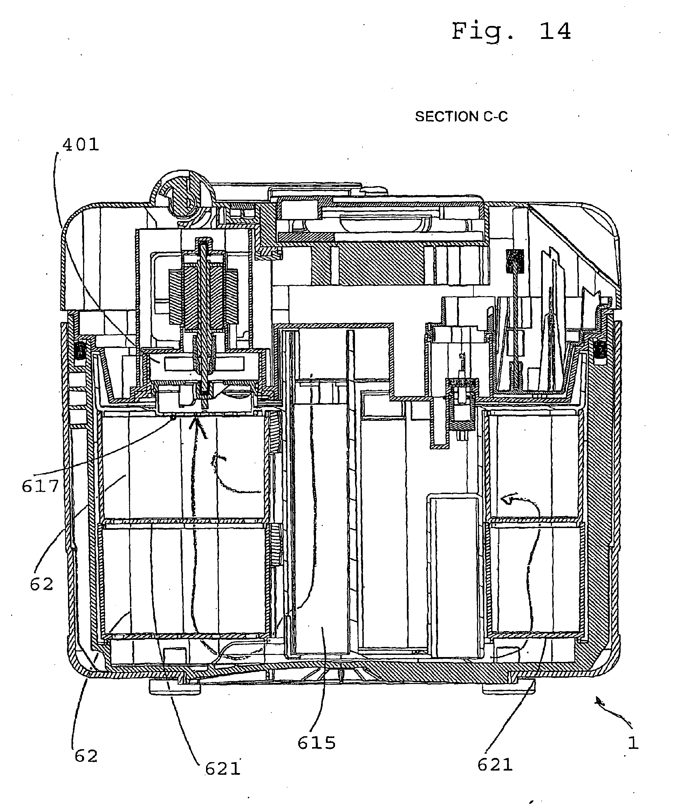

Figure 14 shows a view sectioned along a third plane C-C of the filtering unit of Figure 6;

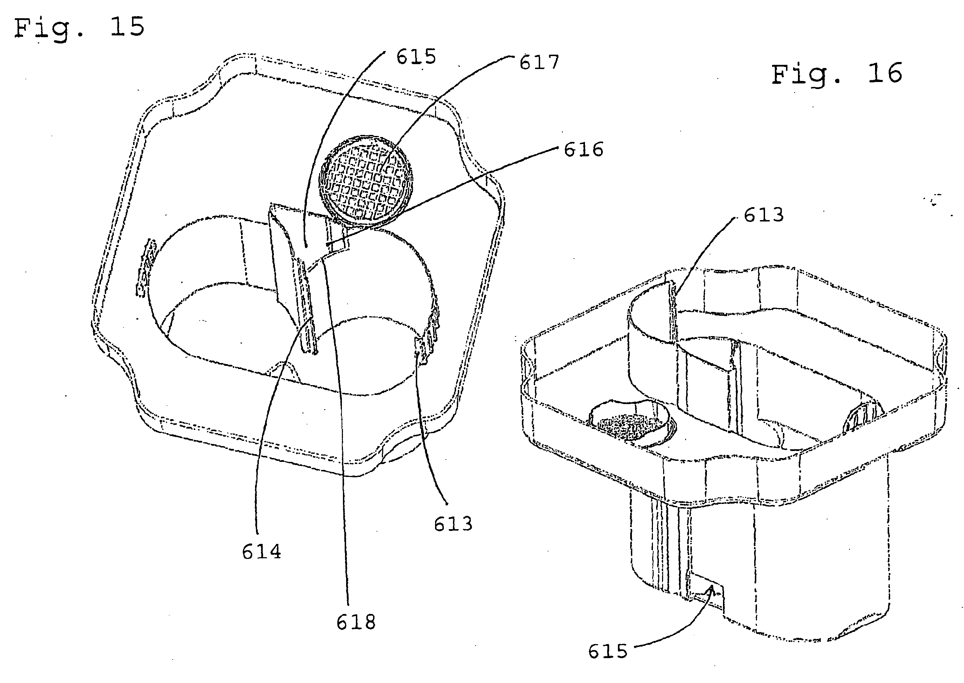

Figure 15 shows a perspective view of a component part of the filtering unit of Figure 5;
Figure 16 shows a perspective view of the component part of Figure 15.

### Detailed description

Referring to the accompanying drawings, 1 shall denote generically a filtering unit for aquariums.

More particularly, the specific embodiment described with reference to said drawings relates to an external filtering unit for domestic aquariums; it must therefore be connected to the aquarium tank by means of appropriate hydraulic connections.

The filtering unit 1 is shown in the drawings according to a normal working configuration. Hereinafter in the present description the positions and orientations, relative and absolute, of the various elements which make up the unit, defined by means of terms such as upper and lower, above and below, horizontal and vertical or equivalent terms, should always be interpreted with reference to this configuration.

The filtering unit 1 comprises a container 100, provided with a fluid inlet 71 and a fluid outlet 73 to allow hydraulic connection thereof to an aquarium tank.

Inside of the container 100 a filtering path is defined which, starting from the flow inlet 71, traverses a series of stations assigned to perform mechanical, chemical and biological filtering of the liquid flow transiting therein to then flow out into the flow outlet 73.

The filtering unit 1 also comprises pumping means 24, 40 intended to move the liquid flow along the abovementioned filtering path.

The stations assigned to perform mechanical and chemical filtering of the liquid flow take shape respectively in a first filtering cartridge 20 and in a second filtering cartridge 30, said cartridges being vertically extractable and housed, in a working configuration, inside a well 619 which extends vertically from above inside the container 100.

The liquid flow traverses a first upstream portion of the filtering path, then the first 20 and the second 30 filtering cartridge arranged in series and finally a downstream portion of the filtering path.

The upstream portion of the filtering path is made up of an inlet channel 72 which places in communication the flow inlet 71 with the first filtering cartridge 20. The downstream portion of the filtering path will be described in detail further on in the present description.

The first filtering cartridge 20, with a substantially cylindrical shape, is made up of three elements associated one with the other: a head portion 27, a filtering portion 25 and a lower portion 26.

The head portion 27, made in an impermeable material, is designed to be associated with an upper cover 40 of the container 100 which makes up the main body of the filtering unit 1,

Two teeth 23 arranged on the external surface of said portion and relative hollows present on the upper cover 40 define in fact a bayonet coupling which allows locking of the first filtering cartridge 20 inside the container 100.

The head portion 27 also comprises, on its external surface, a circumferential groove 241 which holds a gasket and an inlet mouth 242, designed to place in communication the upstream portion of the filtering path with an internal volume 253 of the cartridge, defined by the filtering portion 25.

It should be noted that the bayonet coupling described above is structured in such a way that, with the cartridge coupled, the inlet mouth 242 is effectively in communication with the inlet channel 72 of the filtering path.

Inside the head portion 27 the first filtering cartridge 20 comprises a volumetric pump 24 forming part of the pumping means mentioned above. This volumetric pump 24 is by its very nature self-priming and therefore allows reactivation of the circulation of liquid via the filtering path even when it is partially or completely empty.

This volumetric pump 24 is bordered by two valves 243, 244 arranged in series along an internal L-shaped channel which connects the inlet mouth 242 to the internal volume 253 of the cartridge. The volumetric pump 24 is therefore arranged in proximity of the inlet mouth 242.

It can be actuated by means of an actuation pushbutton 22 arranged at the top of the first filtering cartridge 20. When the cartridge is coupled on the upper cover 40 of the container 100, said actuation pushbutton 22 lies therefore outside of the cover and can be actuated by pressure by an operative intending to operate the volumetric pump 24.

Around the pushbutton 22 a knob 21 develops, designed to allow, by rotation, coupling and uncoupling of the first filtering cartridge 20 with the upper cover 40.

The filtering portion 25 of the first filtering cartridge is made up of a cylindrical body peripherally bordered by a permeable lateral filtering surface 252; said cylindrical body encloses the internal volume 253 of the cartridge.

The lateral filtering surface 252, pleated in the embodiment described here, may be formed by any known filtering means suitable for performing mechanical filtering of the liquid flow; through it the liquid flows out from the internal volume 253 in the well 619 wherein the first filtering cartridge 20 is housed.

The filtering portion 25 has above a connection hole 251, via which the internal L-shaped channel of the head portion 27 communicates with the internal volume 253 of the cartridge.

The lower portion 26 of the first filtering cartridge 20 comprises a beaker not designed for the filtering function and therefore impermeable, which covers the lower end of the filtering portion 25.

In the case of removal of the first filtering cartridge 20 from the well 619, a volume of liquid is retained inside said beaker, so that part of the liquid contained in the well 619 is extracted with the cartridge. Thanks to this system the rising of the level of the liquid caused by subsequent repositioning of the cartridge does not cause an overflow of the same outside of the well 619 and of' the container 100.

This lower portion 26 has flexible fins 261 provided with hooking teeth, designed to be associated with the external periphery of' a rigid ring 254 exhibited by the filtering portion 25. In the embodiment described here the flexible fins 261 are two and opposite one to the other.

It should be noted that the lower portion 26 does not cover the entire extension of the filtering portion 25, so as to allow the release of liquid from the cartridge above a certain position.

The second filtering cartridge 30, with a substantially cylindrical shape, is made up of a central portion 32 enclosed between a head portion 36 and a lower portion 33.

The head portion 36 and the lower portion 33, both impermeable, are coupled one to the other by means of lateral snap couplings 37 (two and opposite one to the other in the specific embodiment described here), defining a shell inside whereof the central portion 32 is enclosed, whose lateral surface is traversed by slots intended to allow the passage of liquid through it.

The two coupled portions leave clear, one in relation to the other, two windows which define an inlet mouth 301 and an outlet mouth 302 at the central portion 32 and at an internal volume 322 enclosed therein. Said inlet 301. and outlet 302 mouths are arranged opposite one to the other and at the same position.

The lower portion 33 of the second filtering cartridge 30 comprises in turn a beaker not designed for the filtering function, and effectively impermeable, which performs a function wholly similar to that of the corresponding lower portion 26 of the first filtering cartridge 20.

The central portion 32 of the second filtering cartridge 20 defines an internal volume 322, which may be filled with adsorbent material such as active carbon to allow the cartridge to perform its filtering action.

The internal volume 322 is traversed transversally by a central portion 321 which divides one in relation to the other the inlet mouth 301 and the outlet mouth 302. Said central portion is interrupted in proximity of the base of the central portion 32, defining a passage aperture situated at a lower position compared to that of the inlet 301 and outlet 302 mouths and which allows fluid communication between said mouths.

The presence of the central portion 321 determines a forced path with a U shape for the liquid flow in transit through the cartridge, thus promoting traversing of the entire volume of the same cartridge. In this way all the adsorbent material introduced in the cartridge is traversed by the liquid flow.

The well 619 has two cylindrical housings for the introduction of the two filtering cartridges 20, 30. It should be noted that the cylindrical housings have a slightly larger diameter compared to that of the same cartridges, in such a way that, when said cartridges are coaxially introduced in their housings, there is a gap between the external wall of the cartridge and the internal wall of the well. The two cylindrical housings communicate one with the other by means of an aperture, longitudinal in relation to their extension and defined at a common tangent plane.

The housing which holds the second filtering cartridge 30 has, overhanging in relation to its internal lateral wall, two opposite radial separators 614, 613 which extend until coming into contact with the external lateral wall of the same second cartridge.

With the cartridge inserted, these radial separators 614, 615 divide therefore the well 619 into a first compartment 611, which comprises the housing of the first filtering cartridge 20 and a first half of the other housing of the cartridge 30, and into a second compartment 612 which comprises instead the second half' of the second housing of the cartridge 30.

In a working configuration, the inlet mouth 301 of the second filtering cartridge 30 faces onto the first compartment 611 of the well 619, while the outlet mouth 302 of the same cartridge faces onto the second compartment 612.

Thus the liquid flow which enters the internal volume 253 of the first filtering cartridge 20, via the inlet mouth 242, flows out radially from the lateral filtering surface 252 then floods the first compartment 611 of the well 619 until entering, above, the inlet mouth 301 of the second filtering cartridge 30, inside whereof it follows a U-shaped path to then exit from the outlet mouth 302 in the second compartment 612 of the well 619.

The second compartment 612 of the well therefore has in turn an upper outflow aperture 616 to allow the transit of the liquid flow towards the downstream portion of the filtering path.

The outflow aperture 616 has a lower edge 618. The position of this lower edge 618 if of particular importance given that it defines the level of the liquid which remains inside the well 619 in the case of interruption of the circulation of the liquid flow in the filtering path. This level must be such that, in the case of extraction of one of the filtering cartridges 20; 30, the volume of liquid removed from the respective impermeable lower portions 26; 33 is sufficient for preventing the overflow of liquid from the container 100 during subsequent reinsertion of the same cartridge. The position of the lower edge 618 is therefore determined according to this criterion.

The downstream portion of the filtering path comprises a vertical channel 615 which extends downwards starting from the outflow aperture 616,

This vertical channel is formed in a space between the two cylindrical housings which make up the well 619.

This vertical channel 615 opens on the base of a plurality of superimposed baskets 62, intended to contain material for the biological filtering of the liquid flow (for example ceramic tubes).

These baskets 62, which in the embodiment described here are two in number, have a lower grille 621 intended to allow the transit of the liquid flow, and develop peripherally around the well 619.

Above the upper basket 62 a grated hole 617 is provided, beyond which a centrifugal pump 401 is arranged, designed to aspirate the flow of liquid and move it via an outlet channel which flows into the fluid outlet 73 of the filtering unit 1.

The container 100 consists of a box-like base inside whereof the baskets 62 are inserted, superimposed, which, as mentioned, are grated below and open above.

Above the baskets 62 an upper tray 61 is therefore introduced in the container 100. The upper tray 61 has a lower overhang which defines internally the well 619 and the vertical channel 615; said lower overhang is inserted inside a free central indentation of the baskets 62, so that the vertical channel 615 flows out at the base of the lower basket 62. The remaining part of the upper tray covers and closes the upper basket 62. It has the abovementioned grated hole 617 which allows the transit of the liquid flow in output from the baskets 62.

Superimposed on the box-like base of the container 100, after interposition of a gasket 51, is its upper cover 40 It is locked on said box-like base with appropriate anchorage means of a known type.

This upper cover 40 has, above, the fluid inlet 71 and the fluid outlet 73; moreover in its interior the respective inlet and outlet channels 72 are formed and the centrifugal pump 401 is housed.

It should be noted among other things that on said upper cover 40 the first filtering cartridge 20 and the second filtering cartridge 30 are coupled. The overhanging top of said cartridges may be partially covered by means of a shutter 11 hinged above the upper cover 40. This shutter 11 has advantageously a hole which allows access to the actuation pushbutton 22 arranged on the first filtering cartridge 20.

Obviously a person skilled in the art, in order to fulfil contingent and specific needs, may make a number of changes and variations to the filtering unit described above, all moreover contained within the sphere of protection of the invention such as defined by the following claims.

## Claims

1. Filtering unit for aquariums (1), comprising: a container (100),
- a liquid filtering path extending between an inlet (71) and an outlet (73) in fluid communication with an aquarium tank;
- pumping means (24, 401);
- at least one vertically extractable filtering cartridge (20), defining an internal volume (253) connected, via an inlet mouth (242), to an upstream portion (72) of the filtering path, said first filtering cartridge (20) being housed in a well (619) and allowing the release of the liquid contained in the first internal volume (253) towards said well (619), said well extending vertically from above inside the container (100) and being connected to a downstream portion of the filtering path via an outflow aperture (616), wherein said first filtering cartridge (20) comprises a lower beaker portion (26) designed to retain a volume of liquid in its interior in the case of extraction from the well (619) of the cartridge; wherein said first filtering cartridge (20) is intended for mechanical filtering of the liquid now and comprises a permeable lateral filtering surface (252), said lateral filtering surface (252) being partially covered by a beaker which defines the lower impermeable portion (26) of the cartridge; **characterised in that** said outflow aperture (619) has a lower edge (618) arranged at a position which defines a level of liquid inside the well (619) such that, in the case of extraction of the first filtering cartridge (20), the volume of liquid removed from the impermeable lower portion (26) is sufficient for preventing the overflow of liquid from the container (100) during the subsequent reinsertion of the first filtering cartridge (20).

2. Filtering unit (1) according to one of the previous claims, comprising moreover a second vertically extractable filtering cartridge (30) intended for chemical filtering of the liquid flow, said second filtering cartridge defining an internal volume (322) with an inlet mouth (301) and an outlet mouth (302) and comprising a lower impermeable portion (33).

3. Filtering unit (1) according to claim 2, wherein the internal volume (322) of the second filtering cartridge (30) is traversed by a central portion (321) which has a passage aperture in proximity of a lower base of the cartridge, the inlet mouth (301) and the outlet mouth (302) opening up, at a position higher than that of the passage aperture of the central portion (321), on lateral surfaces of the cartridge separated one from the other by said central portion (321).

4. Filtering unit (1) according to one of claims 2 or 3, wherein said second filtering cartridge (30) is also housed in the well (619), said well (619) being divided into a first compartment (611), inside whereof the liquid flow flows from the first filtering cartridge (20) and onto which the inlet mouth (301) of the second filtering cartridge (30) faces, and a second compartment (612), onto which the outlet mouth (302) of the second filtering cartridge (30) and the outflow aperture (616) of the well (619) face.

5. Filtering unit (1) according to claim 4, wherein said first and said second cartridge (20, 30) have a cylindrical shape and said well (619) has two respective cylindrical housings, communicating one with the other, for the respective cartridges, the first compartment (611) and the second compartment (612) of the well being divided by radial separators (614, 615) which extend from an internal wall of the cylindrical housing which contains the second cartridge (30) to an external wall of said second cartridge (30).

6. Filtering unit (1) according to one of the previous claims 2 to 5, wherein said outflow aperture (619) has a lower edge (618) arranged at a position which defines a level of liquid inside the well (619) such that, in the case of extraction of the second filtering cartridge (30), the volume of liquid removed from the impermeable lower portion (26) is sufficient for preventing the overflow of liquid from the container (100) during subsequent reinsertion of the second filtering cartridge (30).

7. Filtering unit (1) according to one of the previous claims, wherein the first filtering cartridge (20) is associated with an upper cover (40) of the container (100) by means of a bayonet coupling, said bayonet coupling being structured in such a way that, with the cartridge coupled, the inlet mouth (242) is in communication with the upstream portion (72) of the filtering path.

8. Filtering unit (1) according to one of the previous claims, wherein the pumping means (24, 401) comprise a self-priming volumetric pump (24).

9. Filtering unit (1) according to claim 8, wherein said volumetric pump (24) is arranged inside said first filtering cartridge (20).

10. Filtering unit (1) according to claim 9, wherein said volumetric pump (24) is arranged in an upper portion of said first filtering cartridge (20), in proximity of the inlet mouth (242).

11. Filtering unit (1) according to claim 10, wherein said first filtering cartridge (20) comprises above a pushbutton (22) for actuation of the volumetric pump (24), which can be actuated from the outside of the container (100).

12. Filtering unit (1) according to claim 11, wherein said pumping means (24, 401) comprise moreover a centrifugal pump (401) arranged along the downstream portion of the filtering path.

13. Filtering unit (1) according to one of the previous claims, comprising at least one basket (62) intended to contain maternal for the biological filtering of the liquid flow, said downstream portion of the filtering path traversing said basket.

## Patentansprüche

1. Filtereinheit für Aquarien (1), umfassend: einen Behälter (100),
- eine Flüssigkeitsfilterleitung, welche sich zwischen einem Einlass (71) und einem Auslass (73) in Fluidverbindung mit einem Aquarium erstreckt;
- Pumpmittel (24, 401);
- zumindest eine vertikal herausnehmbare Filterpatrone (20), welche ein inneres Volumen (253) definiert, das über eine Einlassöffnung (242) mit einem stromaufwärtigen Abschnitt (72) der Filterleitung verbunden ist, wobei die erste Filterpatrone (20) in einem Schacht (619) aufgenommen ist und die in dem ersten inneren Volumen (253) enthaltene Flüssigkeit in Richtung des Schachts (619) freigibt, wobei sich der Schacht in vertikaler Richtung von oben ins Innere des Behälters (100) erstreckt und mit einem stromabwärtigen Abschnitt der Filterleitung über eine Austrittsöffnung (616) verbunden ist, wobei die erste Filterpatrone (20) einen unteren becherförmigen Abschnitt (26) umfasst, welcher derart ausgebildet ist, um im Falle der Entnahme der Patrone aus dem Schacht (619) ein Flüssigkeitsvolumen in seinem Inneren zu behalten; wobei die erste Filterpatrone (20) zum mechanischen Filtern des Flüssigkeitsstroms vorgesehen ist und eine durchlässige seitliche Filterfläche (252) umfasst, wobei die seitliche Filterfläche (252) teilweise von einem Becher abgedeckt ist, welcher den unteren undurchlässigen Abschnitt (26) der Patrone definiert; **dadurch gekennzeichnet, dass** die Austrittsöffnung (619) eine untere Kante (618) aufweist, welche in einer Position angeordnet ist, die ein Flüssigkeitsniveau im Inneren des Schachts (619) so definiert, dass im Falle der Entnahme der ersten Filterpatrone (20) das von dem undurchlässigen unteren Abschnitt (26) entfernte Flüssigkeitsvolumen ausreicht, um zu verhindern, dass die Flüssigkeit von dem Behälter (100) während des darauffolgenden Wiedereinsetzens der ersten Filterpatrone (20) überläuft.

2. Filtereinheit (1) nach einem der vorhergehenden Ansprüche, umfassend zudem eine zweite vertikal herausnehmbare Filterpatrone (30), welche zum chemischen Filtern des Flüssigkeitsstroms vorgesehen ist, wobei die zweite Filterpatrone ein inneres Volumen (322) mit einer Einlassöffnung (301) und einer Auslassöffnung (302) definiert und einen unteren undurchlässigen Abschnitt (33) umfasst.

3. Filtereinheit (1) nach Anspruch 2, wobei das innere Volumen (322) der zweiten Filterpatrone (30) von einem zentralen Abschnitt (321) durchquert ist, welcher eine Durchgangsöffnung in der Nähe eines unteren Bodens der Patrone aufweist, wobei die Einlassöffnung (301) und die Auslassöffnung (302) in einer Lage, welche höher ist als die der Durchgangsöffnung des zentralen Abschnitts (321), an seitlichen Flächen der Patrone angeordnet sind, welche durch den zentralen Abschnitt (321) voneinander beabstandet sind.

4. Filtereinheit (1) nach einem der Ansprüche 2 oder 3, wobei die zweite Filterpatrone (30) auch in dem Schacht (619) aufgenommen ist, wobei der Schacht (619) unterteilt ist in ein erstes Fach (611), in dessen Inneres der Flüssigkeitsstrom von der ersten Filterpatrone (20) strömt und an welches die Einlassöffnung (301) der zweiten Filterpatrone (30) angrenzt, und ein zweites Fach (612), an welches die Auslassöffnung (302) der zweiten Filterpatrone (30) und die Austrittsöffnung (616) des Schachts (619) angrenzen.

5. Filtereinheit (1) nach Anspruch 4, wobei die erste und die zweite Patrone (20, 30) eine zylindrische Form aufweisen und der Schacht (619) zwei entsprechende zylindrische Gehäuse für die entsprechenden Patronen aufweist, welche kommunizierend miteinander in Verbindung stehen, wobei das erste Fach (611) und das zweite Fach (612) des Schachts durch radiale Trennelemente (614, 615) unterteilt sind, welche sich von einer inneren Wand des zylindrischen Gehäuses, welches die zweite Patrone (30) enthält, zu einer äußeren Wand der zweiten Patrone (30) erstrecken.

6. Filtereinheit (1) nach einem der vorhergehenden Ansprüche 2 bis 5, wobei die Austrittsöffnung (619) eine untere Kante (618) aufweist, welche in einer Position angeordnet ist, die ein Flüssigkeitsniveau im Inneren des Schachts (619) so definiert, dass im Falle der Entnahme der zweiten Filterpatrone (30) das von dem undurchlässigen unteren Abschnitt (26) entfernte Flüssigkeitsvolumen ausreicht, um zu verhindern, dass die Flüssigkeit von dem Behälter (100) während des darauffolgenden Wiedereinsetzens der zweiten Filterpatrone (30) überläuft.

7. Filtereinheit (1) nach einem der vorhergehenden Ansprüche, wobei die erste Filterpatrone (20) mit einer Bayonettkupplung mit einer oberen Abdeckung (40) des Behälters (100) verbunden ist, wobei die Bayonettkupplung derart aufgebaut ist, dass die mit der Patrone gekoppelte Einlassöffnung (242) mit dem stromaufwärtigen Abschnitt (72) der Filterleitung verbunden ist.

8. Filtereinheit (1) nach einem der vorhergehenden Ansprüche, wobei die Pumpmittel (24, 401) eine selbstansaugende volumetrische Pumpe (24) umfassen.

9. Filtereinheit (1) nach Anspruch 8, wobei die volumetrische Pumpe (24) im Inneren der ersten Filterpatrone (20) angeordnet ist.

10. Filtereinheit (1) nach Anspruch 9, wobei die volumetrische Pumpe (24) in einem oberen Abschnitt der ersten Filterpatrone (20) in der Nähe der Einlassöffnung (242) angeordnet ist.

11. Filtereinheit (1) nach Anspruch 10, wobei die erste Filterpatrone (20) oberseitig einen Druckknopf (22) zum Betätigen der volumetrischen Pumpe (24) umfasst, welcher von außerhalb des Behälters (100) betätigt werden kann.

12. Filtereinheit (1) nach Anspruch 11, wobei die Pumpmittel (24, 401) zudem eine Zentrifugalpumpe (401) umfassen, welche entlang des stromabwärtigen Abschnitts der Filterleitung angeordnet ist.

13. Filtereinheit (1) nach einem der vorhergehenden Ansprüche, umfassend zumindest einen Korb (62), welcher zur Aufnahme von Material für das biologische Filtern des Flüssigkeitstroms ausgebildet ist, wobei der stromabwärtige Abschnitt der Filterleitung den Korb durchquert.

## Revendications

1. Unité (1) de filtration pour aquariums, comprenant :
- un réservoir (100),
- un chemin de filtration de liquide s'étendant entre une entrée (71) et une sortie (73) en communication de fluide avec un réservoir d'aquarium;
- des moyens (24, 401) de pompage;
- au moins une cartouche (20) de filtration extractible verticalement, définissant un volume interne (253) connecté à une partie amont (72) du chemin de filtration, par l'intermédiaire d'une bouche (242) d'entrée, ladite première cartouche (20) de filtration étant logée dans un puits (619) et permettant la libération du liquide contenu dans le premier volume interne (253) vers ledit puits (619), ledit puits s'étendant verticalement du dessus jusqu'à l'intérieur du réservoir (100) et étant connecté à une partie aval du chemin de filtration par l'intermédiaire d'une ouverture (616) de sortie,
dans laquelle ladite première cartouche (20) de filtration comprend une partie inférieure en forme de bécher (26) conçue pour retenir un volume de liquide à l'intérieur de celle-ci en cas d'extraction de la cartouche du puits (619);
dans laquelle ladite première cartouche (20) de filtration est destinée à la filtration mécanique du flux de liquide et comprend une surface de filtration latérale perméable (252), ladite surface de filtration latérale (252) étant partiellement recouverte d'un bécher qui définit la partie imperméable inférieure (26) de la cartouche ;
**caractérisée en ce que** ladite ouverture (619) de sortie a un bord inférieur (618) agencé en un endroit qui définit un niveau de liquide à l'intérieur du puits (619) de telle sorte qu'en cas d'extraction de la première cartouche (20) de filtration, le volume de liquide retiré de la partie inférieure imperméable (26) est suffisant pour éviter que le liquide ne déborde du réservoir (100) lors de la réinsertion ultérieure de la première cartouche (20) de filtration.

2. Unité (1) de filtration selon l'une quelconque des revendications précédentes, comprenant de plus une deuxième cartouche (30) de filtration extractible verticalement destinée à la filtration chimique du flux de liquide, ladite deuxième cartouche de filtration définissant un volume interne (322) avec une bouche (301) d'entrée et une bouche (302) de sortie et comprenant une partie inférieure imperméable (33).

3. Unité (1) de filtration selon la revendication 2, dans laquelle le volume interne (322) de la deuxième cartouche (30) de filtration est traversé par une partie centrale (321) qui a un orifice de passage à proximité d'une base inférieure de la cartouche, la bouche (301) d'entrée et la bouche (302) de sortie s'ouvrant, en un point situé plus haut que l'orifice de passage de la partie centrale (321), sur des surfaces latérales de la cartouche séparées l'une de l'autre par ladite partie centrale (321),

4. Unité (1) de filtration selon l'une des revendications 2 ou 3, dans laquelle ladite deuxième cartouche (30) de filtration est également logée dans le puits (619), ledit puits (619) étant divisé en un premier compartiment (611), à l'intérieur duquel le flux de liquide circule à partir de la première cartouche (20) de filtration et auquel fait face la bouche (301) d'entrée de la deuxième cartouche (30) de filtration, et un deuxième compartiment (612) auquel font face la bouche (302) de sortie de la deuxième cartouche (30) de filtration et l'ouverture (616) de sortie du puits (619).

5. Unité (1) de filtration selon la revendication 4 dans laquelle ladite première cartouche et ladite deuxième cartouche (20, 30) ont une forme cylindrique et ledit puits (619) a deux logements cylindriques respectifs, communiquant l'un avec l'autre, pour les cartouches respectives, le premier compartiment (611) et le deuxième compartiment (612) du puits étant divisés par des séparateurs radiaux (614, 615) qui s'étendent depuis une paroi interne du logement cylindrique qui contient la deuxième cartouche (30) jusqu'à une paroi externe de la deuxième cartouche (30).

6. Unité (1) de filtration selon l'une quelconque des revendications 2 à 5 dans laquelle ladite ouverture (619) de sortie a un bord inférieur (618) agencé en un endroit qui définit un niveau de liquide à l'intérieur du puits (619) de telle sorte qu'en cas d'extraction de la deuxième cartouche (30) de fltration, le volume de liquide retiré de la partie inférieure imperméable (26) est suffisant pour éviter que le liquide ne déborde du réservoir (100) lors de la réinsertion ultérieure de la deuxième cartouche (30) de filtration.

7. Unité (1) de filtration selon l'une quelconque des revendications précédentes dans laquelle la première cartouche (20) de filtration est associée à un couvercle supérieur (40) du réservoir (100) au moyen d'un joint à baïonnette, ledit joint à baïonnette étant conçu de telle sorte que, la cartouche étant couplée, la bouche (242) d'entrée est en communication avec la partie amont (72) du chemin de filtration,

8. Unité (1) de filtration selon l'une quelconque des revendications précédentes dans laquelle les moyens de pompage (24, 401) comprennent une pompe volumétrique auto-aspirante (24).

9. Unité (1) de filtration selon la revendication 8 dans laquelle ladite pompe volumétrique (24) est agencée à l'intérieur de ladite première cartouche (20) de filtration.

10. Unité (1) de filtration selon la revendication 9 dans laquelle ladite pompe volumétrique (24) est agencée dans une partie supérieure de ladite première cartouche (20) de filtration, à proximité de la bouche (242) d'entrée.

11. Unité (1) de filtration selon la revendication 10 dans laquelle ladite première cartouche (20) de filtration comprend un bouton poussoir (22) sur le dessus pour l'activation de la pompe volumétrique (24), qui peut être activée de l'extérieur du réservoir (100).

12. Unité (1) de filtration selon la revendication 11 dans laquelle lesdits moyens de pompage (24, 401) comprennent de plus une pompe centrifuge (401) agencée le long de la partie aval du chemin de filtration.

13. Unité (1) de filtration selon l'une quelconque des revendications précédentes comprenant au moins un panier (62) destiné à contenir des matériaux de filtration biologique du flux de liquide, ladite partie aval du chemin de filtration traversant ledit panier.
